# EUROPEAN PATENT APPLICATION

(11) **EP 2 996 243 A1**
(43) Date of publication of application: **16.03.2016**
(21) Application number: 13884276.0
(22) Date of filing: 10.05.2013
(51) Int. Cl.: H02P 9/00

(54) **ROTATING ELECTRICAL MACHINE SYSTEM OR WIND POWER GENERATION SYSTEM**

(71) Applicant: Hitachi, Ltd., Chiyoda-ku Tokyo 100-8280 (JP)
(72) Inventor: KUSUNO Nobuhiro, Tokyo 100-8280 (JP); HORI Masahiro, Tokyo 100-8280 (JP); KIMURA Mamoru, Tokyo 100-8280 (JP)
(74) Representative: MERH-IP Matias Erny Reichl Hoffmann Patentanwälte PartG mbB
(86) International application number: PCT/JP2013/063107
(87) International publication number: WO 2014/181454

(57) **Abstract**

In order to provide a rotation electric machine system in which a rotation electric machine that generates power to be supplied to an AC power source of a power system or the like is small-sized, and a wind power generation system, an active power command or a mechanical torque command, and a reactive power command which are output to the AC power source from a first rotation electric machine and a second rotation electric machine which generate power to be supplied to the AC power source of the power system or the like, are distributed to a first power converter which is connected to a first rotor winding wire and switches an AC and a DC to each other, and to a second power converter which is connected to a second rotor winding wire and a DC side of the first power converter, and switches the DC and the AC to each other.

## Description

### Technical Field

The present invention relates to a rotation electric machine system in which a power converter is mounted on a rotor, and to a configuration of an equipment, such as a control device which controls active power and reactive power that are output from a rotation electric machine, and a detection device which is necessary for the control.

### Background Art

In recent years, since interest in an energy saving problem or global warming prevention has been rising, a power generation system which uses natural energy which is called a wind power generation system has been rapidly supplied. Since the energy which is obtained from the wind depending on a wind speed continuously changes in the wind power generation system, an operation of power generation can be performed efficiently in a much wider wind speed region, by using a power converter or the like which converts frequency of the generated power that changes depending on the rotating speed of a pitch mechanism or a windmill that makes a blade angle of the windmill variable in accordance with the wind speed, into frequency of a power system. The operation of the wind power generation system is called a variable speed operation.

In an aspect of the wind power generation system in which the variable speed operation is possible, an excitation type rotation electric machine system (doubly-fed induction machine system) is widely employed in a power conversion of wind energy with a small capacity of a power converter which is approximately 30% of a total output electric power energy of the wind power generation system since the variable speed operation which is equivalent to that of a synchronous type rotation electric machine system that requires a power converter for the same capacity as that of the power generator is possible. In the excitation type rotation electric machine system, the power converter is small-sized, a generation loss due to the power conversion is small since the handled power has a small capacity, and efficient power generation operation is possible. The same type of excitation type rotation electric machine system is described in PTL 1, for example.

In addition, it is required for the wind power generation system to output reactive power for stabilizing a voltage of the power system in addition to the output of the generated power (active power). In the excitation type rotation electric machine system, since it is possible to control the reactive power which is output to the power system by the power converter for a small capacity via the rotation electric machine, in general, the reactive power is output to the power system only by the power converter on the rotating machine side, and the power converter on the power system side is controlled not to output the reactive power. For this reason, the capacity of the power converter on the power system side further decreases compared to the capacity of the power converter on the rotating machine side.

### Citation List

### Patent Literature

PTL 1: JP-A-2008-11607

### Summary of Invention

### Technical Problem

However, in a control method in the rotation electric machine system in the related art, the reactive power is output only from the rotation electric machine side since the rotation electric machine is provided on one side of the power converter. In other words, a current amount which flows in a winding wire provided in the rotation electric machine increases, and the rotation electric machine becomes large-sized. When the rotation electric machine which generates power to be supplied to an AC power source of the power system or the like becomes large-sized, the rotation electric machine system which has the rotation electric machine and the power converter mounted thereon becomes large-sized or the like.

An object of the present invention is to provide a rotation electric machine system in which a rotation electric machine that generates power to be supplied to an AC power source is small-sized, and a wind power generation system. Solution to Problem

In order to solve the above-described problem, a rotation electric machine system according to the present invention, includes: a first rotation electric machine which includes a first stator having a first stator winding wire, and a first rotor that is disposed to have a space toward the first stator has a first rotor winding wire, and generates power to be supplied to an AC power source; a second rotation electric machine which includes a second stator having a second stator winding wire, and a second rotor that is disposed to have a space toward the second stator and has a second rotor winding wire; a first power converter which is connected to the first rotor winding wire, and converts an AC and a DC to each other; and a second power converter which is connected to the second rotor winding wire, is connected to the DC side of the first power converter, and converts the DC and the AC to each other, in which the first stator winding wire and the second stator winding wire are connected to the AC power source, and in which an active power command or a mechanical torque command, and a reactive power command which are output to the AC power source from the first rotation electric machine and the second rotation electric machine, are distributed to the first power converter and the second power converter.

In addition, a wind power generation system according to the present invention includes: the rotation electric machine system; a blade which receives wind and rotates; and a shaft which rotates in accordance with the rotation of the blade, in which each of the rotation electric machines rotates in accordance with the rotation of the shaft.

### Advantageous Effects of Invention

According to the present invention, it is possible to provide a rotation electric machine system in which a rotation electric machine that generates power to be supplied to an AC power source is small-sized, and a wind power generation system.

### Brief Description of Drawings

[Fig. 1] Fig. 1 is a rotation electric machine system according to an example.
[Fig. 2] Fig. 2 is a schematic view of wiring connection of the rotation electric machine system according to the example and a detection device.
[Fig. 3] Fig. 3 is a control method of the rotation electric machine system according to the example.
[Fig. 4] Fig. 4 is a control method of the rotation electric machine system according to the example which corresponds to an alternative of Fig. 3.
[Fig. 5] Fig. 5 is a control method of an excitation type rotation electric machine system for comparison.
[Fig. 6] Fig. 6 is a rotation electric machine system according to another example.
[Fig. 7] Fig. 7 is a rotation electric machine system according to still another example.

### Description of Embodiments

Hereinafter, embodiments of a rotation electric machine system according to the present invention will be described in detail with reference to each drawing. In addition, in each drawing, common parts will be given the same reference numerals, and the overlapped description will be omitted. Furthermore, the followings are merely examples, and the embodiments of the invention are not limited to the following aspects.

### «First Embodiment»

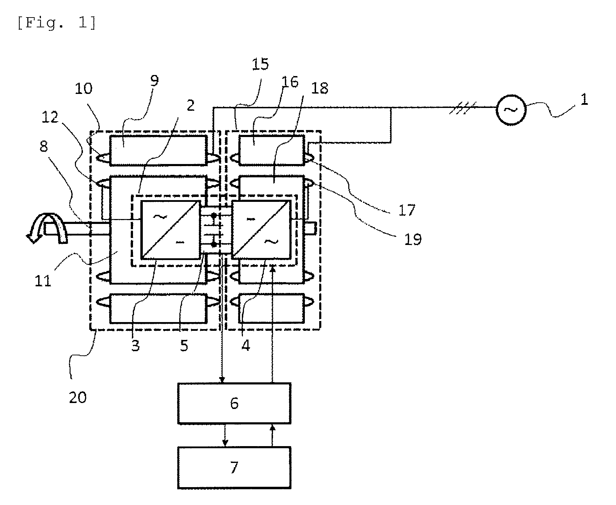

In a rotation exciter (15) according to the example, a stator winding wire (17) is electrically connected to a power system (1), AC power converters (3, 4) which are generally a two-level converter or a three-level converter, and which are configured as a plurality of semiconductor switching units in which a power semiconductor switching element of an insulated gate bipolar transistor (IGBT) or the like and a diode element which is a reflux rectifier element are connected in reversely parallel to the IGBT are connected to each other in series or in parallel, are mounted, an AC terminal thereof is connected to rotor winding wires (12, 19), and a smoothing capacitor (5) is connected to a DC terminal thereof. Fig. 1 is a rotation electric machine system which is operated as a rotor (11) of an excitation type rotation electric machine is AC-excited by the above-described rotation exciter (15) by using the AC power converter (3) which converts supplied and demanded DC power into the AC power again. Therefore, an excitation type rotation electric machine (20) mainly becomes a rotation electric machine by sending generated power to the power system side.

The excitation type rotation electric machine (20) and the rotation exciter (15) are connected to a coaxial shaft 8, and the shaft 8 is connected to a blade side which is not illustrated. The blade receives the wind and rotates, but the shaft 8 also rotates in accordance with the rotation of the blade. Accordingly, rotors of the excitation type rotation electric machine (20) and the rotation exciter (15) also rotate.

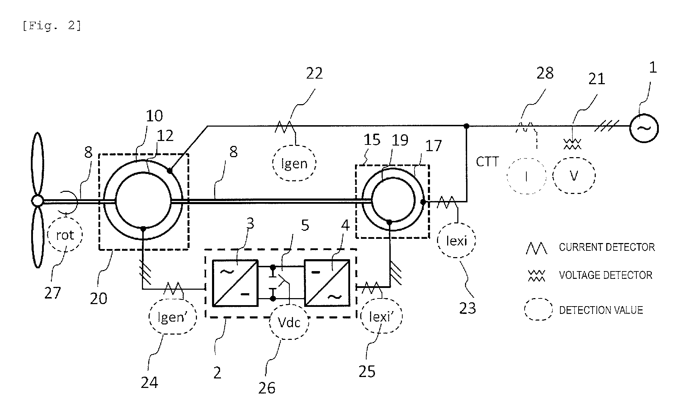

A control device (6) of the power converters (3, 4) embedded in the rotation electric machine system to which the present invention illustrated in the above-described Fig. 1 is employed controls the rotation electric machine system according to an active power command and a reactive power command imparted from a windmill control device (7) which is a host control device, by using an input from electrical detector groups (21 to 28) illustrated in Fig. 2. The electrical detector groups are configured of a voltage detector (21) which detects a voltage V of the power system (1), a current detector (22) which detects a current Igen on a rotating machine power system side (primary side), a current detector (23) which detects a current Iexi on a rotation exciter power system side (primary side), a current detector (24) which detects a current Igen' on a rotating machine power converter side (secondary side), a current detector (25) which detects a current Iexi' on a rotation exciter power converter side, a voltage detector (26) which detects a voltage Vdc of the DC portion smoothing capacitor (5) of a power converter (2), and a rotation meter (27) which detects a rotational frequency rot of the rotor.

Furthermore, by providing a current detector (28) which detects a current of the power system instead of the current detector (22) or the current detector (23), and by performing correction calculation according to Kirchhoff's current law by using impedance information between detection points to be detected , the calculation value can also be used as an substitute of a detection value detected by the current detector (22) or the current detector (23).

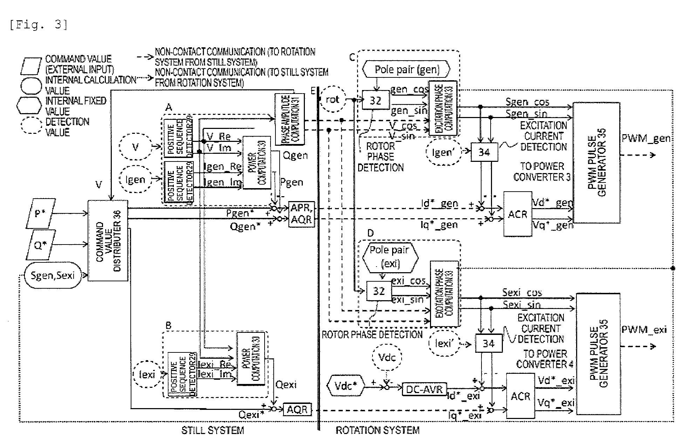

Furthermore, a group of the current detector (22) and the current detector (24), or a group of the current detector (23) and the current detector (25) can respectively estimate the other detection value by any one detection value by using electrical characteristics information of the excitation type rotation electric machine (20) or the rotation exciter (15), and the estimation value can also be used as an substitute of the detection value. For example, the detection value of the current detector (22) may be estimated by using the detection value Igen' of the current detector (24) and the electrical characteristics information of the excitation type rotation electric machine (20), the estimation value may also be controlled as an substitute of the detection value Igen. Hereinafter, the detection values are used in the entire description of a control method which uses a control block diagram (Fig. 3), and estimation processing or correction processing or the like in which the above-described estimation value is used will not be described in detail. However, even when the estimation value is used, it is needless to say that similar control can be performed.

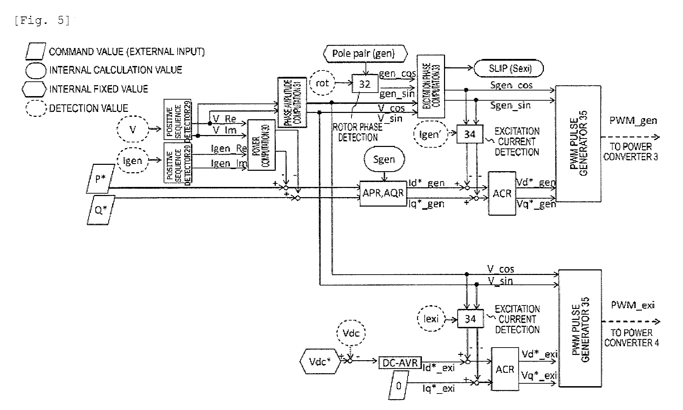

The control block diagram illustrated in Fig. 3 is for controlling the rotation electric machine system (Fig. 1) by inputting each of the detection values by the above-described electrical detector groups (21 to 28), and an active power command (P*) and a reactive power command (Q*) which are imparted from the windmill control device (7). In addition, a control block for controlling an excitation type rotation electric machine system in the related art is illustrated in Fig. 5 as a target to be compared. In the control blocks of Figs. 3 to 5, the correction processing or the like which is not related to expression of effects is omitted. Hereinafter, each function of the common control block will be described. A positive sequence detector (29) computes a synchronous component (Re component) and a 90-degree leading component (Im component) with respect to an internal signal having 50 Hz or 60 Hz of a positive sequence component in which frequency is any one of 50Hz or 60 Hz and 3 AC phases (UVW) are in an order that a V phase is phase-lagged by 120 degrees with respect to a U phase, and a W phase is phase-lagged by 120 degrees with respect to the V phase, and the above-described 50 Hz or 60 Hz is set to match AC frequency of the power system (1) to which the rotation electric machine system is connected. A power computer (30) computes active power P and reactive power Q by calculation values V_Re, V_Im and I_Re, and I_Im (both the Igen and the Iexi) of the above-described positive sequence detector 29. A phase detector (31) only extracts phase information V_cos and V-sin from the calculation value of the positive sequence detector (29). A rotor phase detector (32) detects phase information of electric angle gen_cos and gen_sin, or exi_cos and exi_sin of the rotor by inputting a number of pole pairs the rotating machine and the information rot from the rotation meter 27. An excitation phase computation (33) computes phase difference information (slip) Sgen_cos and Sgen_exi (or Sexi_cos and Sexi_sin) from the voltage phase information V_cos and V_sin of the power system (1), and the phase information of electric angle gen_cos and gen_sin (or exi_cos and exi_sin) of the rotor. An excitation current detector (34) detects an active current component Id_gen and a reactive current component Iq_gen (or Id_exi and Iq_exi) which are synchronized to phase information S_cos and S_sin (both gen and exi) by using the input phase information Sgen_cos and Sgen_exi (or Sexi_cos and Sexi_sin) and Igen'. A DC-AVR computes an active current command value (Id*_exi) so that the DC voltage (Vdc) of the smoothing capacitor 5 matches a DC voltage command value (Vdc*). An ACR computes voltage command values Vd*_gen and Vq*_gen (or Vd*_exi and Vq*_exi) so that a deviation between input current command values Id*_gen and Iq*_gen (or Id*_exi and Iq*_exi) and the detection values Id_gen and Iq_gen (or Id_exi and Iq_exi) becomes the minimum value. A PWM pulse generator (35) generates driving pulses of semiconductor switching elements of each of the power converters based on the input phase information Sgen_cos and Sgen_exi (or Sexi_cos and Sexi_sin) and the voltage command values Vd*_gen and Vq*_gen (or Vd*_exi and Vq*_exi). Furthermore, each of A and B, and C and D in Fig. 3 is the same type of control mechanism, but in Fig. 5, it is not necessary to perform frequency control of the rotation exciter since the rotation exciter is not used. Therefore, the control mechanism of B illustrated in Fig. 3 is not necessary. In addition, the reactive power control is also not necessary since the rotation exciter is not provided on a power converter system side. Therefore, the control mechanism of D illustrated in Fig. 3 is also not necessary. Since the control mechanism of B is not necessary, it is not necessary to perform comparison between a reactive power command value Qexi which flows to the rotation exciter (15) and a reactive power command value Qexi* to flow to the rotation exciter (15).

In a control method of the excitation type rotation electric machine system in the related art illustrated in Fig. 5, the power system side power converter (4) controls the supply and demand of the active power to the power system (1) so that the voltage (Vdc) of the DC portion smoothing capacitor (5) of the power converter (2) match the voltage command value (Vdc*) by the DC-AVR, and the rotating machine side power converter (3) controls the active power and the reactive power which are output from a stator of the excitation type rotation electric machine. In order to not perform the supply and the demand of the reactive power to the power system (1) by the power system side power converter (4), 0 which is a fixed value is input to the reactive current command (Iq*_exi).

Meanwhile, in a control method of the rotation electric machine system (Fig. 1) according to the embodiment illustrated in Fig. 3, in order to supply and demand the active power, and further, the reactive power from the rotation exciter (15), in addition to the control method (Fig. 5) of the above-described excitation type rotation electric machine system in the related art, a command value distributor (36) which distributes the active power command (P*) and the reactive power command (Q*) to the rotation exciter (15) and the excitation type rotation electric machine (20) is provided, and the command value distributor (36) computes each of power command values (Pgen*, Pexi*, Qgen*, Qexi*) based on the electrical characteristics information of each of the rotating machines (15, 20) by inputting each of the power command values (P*, Q*), slipping signals Sgen and Sexi of each of the rotating machines (15, 20), and a voltage amplitude V of the power system (1). Since active power (Pexi) which the rotation exciter (15) receives is equivalent to the active power which the DC portion smoothing capacitor (5) controlled by the DC-AVR supplies and demands when ignoring the power loss in accordance with the operation of the power converter (4), the active power (Pexi) is not actively used in the control in a post-stage in the control method illustrated in Fig. 3. However, an APR may be provided instead of the DC-AVR, and the control which is the same as that of a power converter (3) may be performed.

As the rotation electric machine system which is provided with the rotation exciter, as far as the active power P and the reactive power Q which are output to the power system 1 match a desired value determined by a host controller, it is possible to arbitrarily determine how to distribute the active power P and the reactive power Q to each of the power converters 3 and 4.

The command value distributor (36) computes the current value to flow to each of the rotating machines (15, 20) from the active power command (P*) and the reactive power command (Q*) which are output to the power system (1), and distributes each of the power command values (P*, Q*) so that the current to flow to each of the rotating machines (15, 20) substantially becomes the minimum value. Accordingly, it is not necessary to design each of the rotating machines (15, 20) to endure a large amount of current in advance, and it is possible to make the size of the machines small.

In addition, the command value distributor (36) computes the current value to flow to each of the rotating machines (15 and 20) from the active power command (P*) and the reactive power command (Q*) which are output to the power system, and distributes each of the power command values (P*, Q*) so that absolute values of the current to flow to each of the rotating machines (15, 20) become substantially the same as each other. Accordingly, it is not necessary to design only one of the rotating machines (15, 20) to endure a large amount of current in advance, and it is possible to make the size of the machines small.

In addition, the command value distributor (36) computes the current value to flow to each of the rotating machines (15, 20) from the active power command (P*) and the reactive power command (Q*) which are output to the power system, and distributes each of the power command values (P*, Q*) so that the loss generated by each of the rotating machines (15, 20) from the electrical characteristics of each of the rotating machines is substantially equivalent to the current to flow to each of the rotating machines (15, 20). Accordingly, it is not necessary to design only one of each of the rotating machines (15, 20) to endure the large amount of generated heat in advance, and it is possible to make the size of the machines small.

In addition to this, by designing an internal calculation processing of the command value distributor (36) to optimize items according to the reasons of the design, it is possible to make the size of each of the rotating machines (15, 20) small.

In addition, since the rotation electric machine system (Fig. 1) according to the present invention has the power converting device (2) mounted on the rotation portion, an electric component mounted on a rotation system and an electric component mounted on a stationary system exist. The rotation electric machine system (Fig. 1) according to the present invention is a system in which maintenance characteristics are improved by supplying and demanding the power to the rotor without using a brush (13) and a slip ring (14) of the excitation type rotation electric machine system. However, even when signal transmission of the stationary system and the rotation system is performed by a mechanism which is configured of the brush and the slip ring in wiring that does not handle a large amount of power similar to the control signal, wear of the brush is small, and the maintenance characteristics as a system are not damaged. Therefore, in the control method illustrated in Fig. 3, an appropriate signal line may be used as the wiring which is configured of the brush and the slip ring after realizing a control circuit. In addition, a method by a non-contact communication, such as a wireless or optical method, also can be employed as a method of signal transmission of the stationary system and the rotation system.

For example, in the control method illustrated in Fig. 3, a long dashed line arrow expresses that the control method is realized by the non-contact signal transmission to the rotation system from the stationary system, and the dashed line arrow expresses that that the control method is realized by the non-contact signal transmission to the stationary system from the rotation system. Although not actively illustrated, the signal communication routes include additional processing and equipment which are necessary for the non-contact transmission. In addition, in Fig. 3, a virtual solid line E is added to make the division between the rotation system and the stationary system apparent. In this manner, without the non-contact signal transmission to a signal transferring route of the current detection signal which becomes an input of the current control device, the circuit which sends and receives the non-contact signal becomes unnecessary, and high-speed and high-response current control can be realized. Accordingly, the response becomes easy even to a phenomenon which is caused by the high-speed current control, such as an accident of the power system.

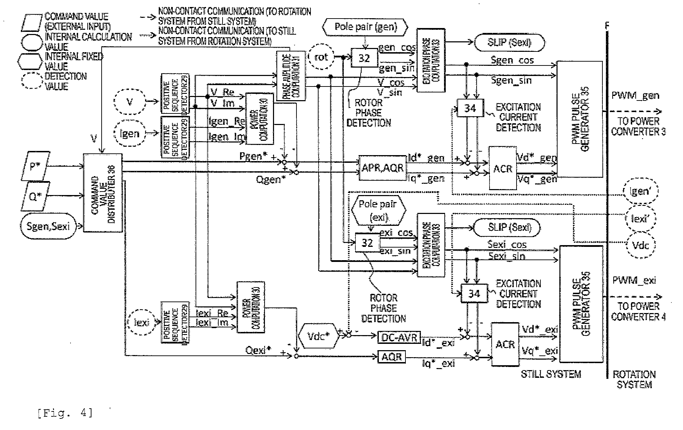

Furthermore, a separation method of the signal route which employs the non-contact signal transmission is not limited to Fig. 3, and for example, as illustrated in Fig. 4, after sending the output from the detector groups mounted on the rotation system to the entire stationary system and calculating the output according to the control method in the stationary system, only the driving pulse of the semiconductor switching element may be sent to the rotation system. Even in Fig. 4, a virtual solid line F is added to make the division between the rotation system and the stationary system apparent. In this manner, it is possible to reduce the number of control devices which are mounted on the rotation system, and to reduce a malfunction risk in accordance with the rotation. It is needless to say that the separation of the rotation system and the stationary system is not limited thereto if there is a function of distributing the active power command value (P*) and the reactive power command value (Q*) which are output by the rotation electric machine system to the power converters (3, 4) which control the AC power handled by each of the rotating machines (15, 20) regardless of the signal transmission state as illustrated in the specification and the drawings.

### «Another Embodiment»

The rotation electric machine system according to the present invention can be employed in a generation system which power-converts rotation energy, such as a hydraulic power generation system, not being limited to a wind power generation system. Furthermore, even in a motor system which converts electrical energy to rotation energy as a torque, similarly, it is possible to make the size of the motor which configures the system small by distributing torque commands to each of the rotating machines in the command value distributor described in the above-described example as the sum of the rotational frequency and the torque is the energy.

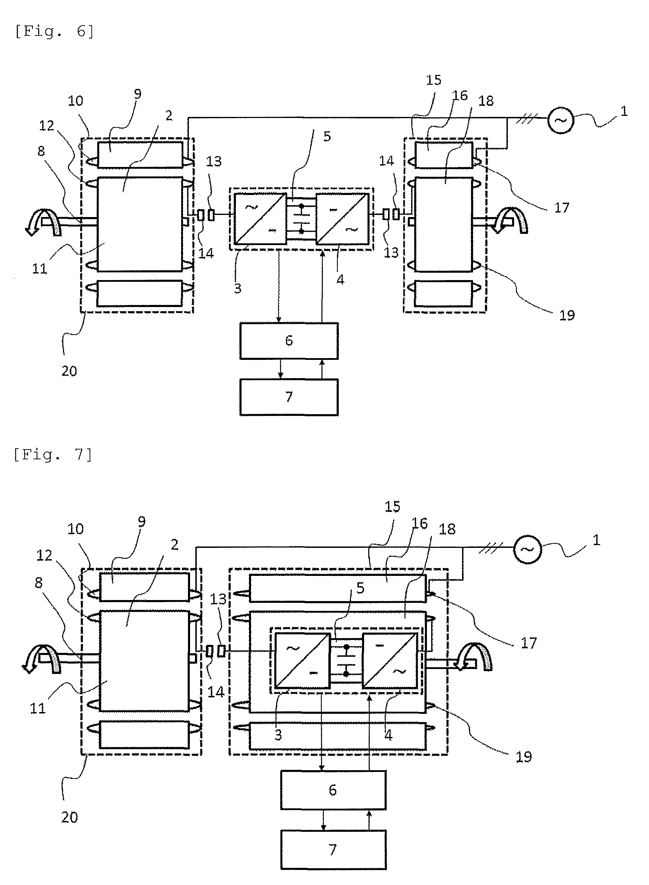

In addition, within a range of a use in which the maintenance characteristics of the system does not become an issue of operation, even in a configuration (Fig. 6) in which the power converter (3) and the power converter (4) according to the present invention are mounted on the stationary system, and the power is supplied and demanded to the rotor by the brush (13) and the slip ring (14) similar to the excitation type rotation electric machine system, and a configuration (Fig. 7) in which the power converters (3, 4) are performed on one rotating machine, and the power is received by the other rotating machine by the brush (13) and the slip ring (14), similarly, it is possible to make the size of the rotating machine that configures the system small. In this case, it is necessary to provide the rotation meter in every rotation electric machine, and a different rotational frequency is input to the rotor phase detector (32) on the excitation type rotation electric machine (20) side, and the rotor phase detector (32) on the rotation exciter (15) side.

Furthermore, according to each of the above-described examples, the excitation type rotation electric machine (20) is provided with a control unit which controls the power computer (30) (corresponds to a detecting unit for the excitation type rotation electric machine) on the excitation type rotation electric machine side that detects the active power and the reactive power which are output from the excitation type rotation electric machine (20), and the power computer (30) on the excitation type rotation electric machine side, the rotation exciter (15) is provided with a control unit which controls the power computer (30) (corresponds to a detecting unit for the rotation exciter) on the rotation exciter side that detects the active power and the reactive power which are output from the rotation exciter (15), and the power computer (30) on the rotation excitation exciter side, and the excitation type rotation electric machine (20) and the rotation exciter (15) separately control each reactive power. Therefore, when the reactive current is output for stabilizing the voltage of the power system (1), there is not a concern that the control methods of each reactive power of the excitation type rotation electric machine (20) and the rotation exciter (15) are buffered.

### Reference Signs List

1 POWER SYSTEM
2 POWER CONVERTER
3, 4 (INDIVIDUAL) POWER CONVERTER
5 DC PORTION SMOOTHING CAPACITOR
6 POWER CONVERTER CONTROL DEVICE
7 WINDMILL CONTROL DEVICE
8 ROTATION SHAFT OR SHAFT
9 ROTATING MACHINE STATOR CORE
10 ROTATING MACHINE STATOR WINDING WIRE
11 ROTATING MACHINE ROTOR CORE
12 ROTATING MACHINE ROTOR WINDING WIRE
13 BRUSH
14 SLIP RING
15 ROTATION EXCITER
16 ROTATION EXCITER STATOR CORE
17 ROTATION EXCITER STATOR WINDING WIRE
18 ROTATION EXCITER ROTOR CORE
19 ROTATION EXCITER ROTOR WINDING WIRE
20 EXCITATION TYPE ROTATION ELECTRIC MACHINE
21 VOLTAGE DETECTOR OF POWER SYSTEM
22 CURRENT DETECTOR ON ROTATING MACHINE POWER SYSTEM SIDE (PRIMARY SIDE)
23 CURRENT DETECTOR ON ROTATION EXCITER POWER SYSTEM SIDE (PRIMARY SIDE)
24 CURRENT DETECTOR ON ROTATING MACHINE POWER CONVERTER SIDE (SECONDARY SIDE)
25 CURRENT DETECTOR ON ROTATION EXCITER POWER CONVERTER SIDE (SECONDARY SIDE)
26 DC PORTION SMOOTHING CAPACITOR VOLTAGE DETECTOR
27 ROTATION METER
28 CURRENT DETECTOR OF POWER SYSTEM
29 POSITIVE SEQUENCE DETECTOR
30 POWER COMPUTER
31 PHASE AMPLITUDE COMPUTER
32 ROTOR PHASE DETECTOR
33 EXCITATION PHASE COMPUTER
34 EXCITATION CURRENT DETECTOR
35 PWM PULSE GENERATOR
36 ACTIVE POWER COMMAND AND REACTIVE POWER COMMAND DISTRIBUTOR
DC-AVR DC VOLTAGE AUTOMATIC CONTROL DEVICE
ACR AUTOMATIC CURRENT CONTROL DEVICE
APR AUTOMATIC ACTIVE POWER CONTROL DEVICE
AQR AUTOMATIC REACTIVE POWER CONTROL DEVICE
P* ACTIVE POWER COMMAND
Q* REACTIVE POWER COMMAND
Vdc DC VOLTAGE DETECTION VALUE
Vdc* DC VOLTAGE COMMAND VALUE
Id ACTIVE CURRENT
Id* ACTIVE CURRENT COMMAND VALUE
Iq REACTIVE CURRENT
Iq* REACTIVE CURRENT COMMAND VALUE
Vd POWER SYSTEM VOLTAGE AND IN-PHASE COMPONENT
Vq POWER SYSTEM VOLTAGE AND 90-DEGREE PHASE ADVANCEMENT COMPONENT
V POWER SYSTEM VOLTAGE

## Claims

1. A rotation electric machine system, comprising:
a first rotation electric machine which includes a first stator having a first stator winding wire, and a first rotor that is disposed to have a space toward the first stator has a first rotor winding wire, and generates power to be supplied to an AC power source;
a second rotation electric machine which includes a second stator having a second stator winding wire, and a second rotor that is disposed a space toward the second stator has a second rotor winding wire;
a first power converter which is connected to the first rotor winding wire, and switches an AC and a DC to each other; and
a second power converter which is connected to the second rotor winding wire, is connected to the DC side of the first power converter, and switches the DC and the AC to each other,
wherein the first stator winding wire and the second stator winding wire are connected to the AC power source, and
wherein an active power command or a mechanical torque command, and a reactive power command which are output to the AC power source from the first rotation electric machine and the second rotation electric machine, are distributed to the first power converter and the second power converter.

2. The rotation electric machine system according to claim 1, further comprising:
a first detecting unit which detects active power and reactive power output by the first rotation electric machine, and a first control unit which controls the first detecting unit;
a second detecting unit which detects active power and reactive power output by the second rotation electric machine, and a second control unit which controls the second detecting unit.

3. The rotation electric machine system according to claim 1,
wherein the active power command or the mechanical torque command, and the reactive power command which are output to the AC power source from the first rotation electric machine and the second rotation electric machine, are distributed to the first power converter and the second power converter to make a current which flows to the first rotation electric machine and the second rotation electric machine become substantially the minimum value.

4. The rotation electric machine system according to claim 1,
wherein the active power command or the mechanical torque command, and the reactive power command which are output to the AC power source from the first rotation electric machine and the second rotation electric machine, are distributed to the first power converter and the second power converter to make absolute values of the current which flows to the first rotation electric machine and the second rotation electric machine become substantially equivalent to each other.

5. The rotation electric machine system according to claim 1,
wherein the active power command or the mechanical torque command, and the reactive power command which are output to the AC power source from the first rotation electric machine and the second rotation electric machine, are distributed to the first power converter and the second power converter to make losses generated by the first rotation electric machine and the second rotation electric machine become equivalent to each other.

6. The rotation electric machine system according to any one of claims 1 to 5,
wherein, comparing to a reactive power value that flows to the second rotation power machine, and a reactive power command value to flow to the second rotation power machine, the reactive power command is output to the second power converter based on the comparison result.

7. The rotation electric machine system according to any one of claims 1 to 6,
wherein the first rotation electric machine is an excitation type rotation electric machine, and the second rotation electric machine is a rotation exciter,
wherein a first voltage detector which detects a voltage of a DC connection portion of the first power converter and the second power converter is provided,
wherein an electric route which connects the first stator winding wire and the AC power source to each other, and an electric route which connects the second stator winding wire and the AC power source to each other, are connected to each other in a connection portion, and the connection portion is electrically connected to the AC power source,
wherein the system, further comprises:
at least two among a first current detector which detects a current that flows between the first stator winding wire and the connection portion, a second detector which detects a current that flows between the second stator winding wire and the connection portion, and a third current detector which detects a current that flows between the connection portion and the AC power source;
a rotation state detecting unit which detects a rotation state of each of the rotation electric machines; and
a second voltage detector which detects a voltage of the AC power source, and
wherein, based on detection values of each of the voltage detectors, the current detector, and the rotation state detecting unit, a command which is output to the first power converter and the second power converter is prepared.

8. The rotation electric machine system according to any one of claims 1 to 6,
wherein the first rotation electric machine is an excitation type rotation electric machine, and the second rotation electric machine is a rotation exciter,
wherein the system, further comprises:
a first voltage detector which detects a voltage of a DC connection portion of the first power converter and the second power converter;
a first current detector which detects a current that flows between the first rotator winding wire and the first power converter;
a second current detector which detects a current that flows between the second rotor winding wire and the second power converter;
a rotation state detecting unit which detects a rotation state of each of the rotation electric machines; and
a second voltage detector which detects a voltage of the AC power source, and
wherein, based on detection values of each of the voltage detectors, each of the current detectors, and the rotation state detecting unit, a command which is output to the first power converter and the second power converter is prepared.

9. The rotation electric machine system according to any one of claims 1 to 6,
wherein the first rotation electric machine is an excitation type rotation electric machine, and the second rotation electric machine is a rotation exciter,
wherein a first voltage detector which detects a voltage of a DC connection portion of the first power converter and the second power converter is provided,
wherein an electric route which connects the first stator winding wire and the AC power source to each other, and an electric route which connects the second stator winding wire and the AC power source to each other, are connected to each other in a connection portion, and the connection portion is electrically connected to the AC power source,
wherein the system, further comprises:
at least two among a first current detector which detects a current that flows between the first stator winding wire and the connection portion, a second detector which detects a current that flows between the second stator winding wire and the connection portion, and a third current detector which detects a current that flows between the connection portion and the AC power source;
a fourth current detector which detects a current that flows between the first rotor winding wire and the first power converter;
a fifth current detector which detects a current that flows between the second rotor winding wire and the second power converter;
a rotation state detecting unit which detects a rotation state of each of the rotation electric machines; and
a second voltage detector which detects a voltage of the AC power source, and
wherein, based on a detection value of each of the voltage detectors, each of the current detectors, and the rotation state detecting unit, a command which is output to the first power converter and the second power converter is prepared.

10. The rotation electric machine system according to claim 7,
wherein a current value which flows between the first rotor winding wire and the first power converter is estimated from a current value which flows between the first stator winding wire and the connection portion, and
wherein a current value which flows between the second rotor winding wire and the second power converter is estimated from a current value which flows between the second stator winding wire and the connection portion.

11. The rotation electric machine system according to claim 8,
wherein a current value which flows to the first stator winding wire is estimated from a current value which flows between the first rotor winding wire and the first power converter, and
wherein a current value which flows to the second stator winding wire is estimated from a current value which flows between the second rotor winding wire and the second power converter.

12. The rotation electric machine system according to any one of claims 7 to 11,
wherein control devices which control the power converter are separately provided in a rotation portion that rotates together with at least any of the rotors, and in a still portion,
wherein each of the voltage detectors, each of the current detectors, and the rotation state detecting unit are provided in the rotation portion, and
wherein any of the detection values from each of the voltage detectors, each of the current detectors, and the rotation state detecting unit are also sent to the control device provided in the still portion, and a signal which controls the power converter is sent to the rotation portion from the control device provided in the still portion.

13. The rotation electric machine system according to any one of claims 1 to 11,
wherein the control devices which control the power converter are separately provided in a rotation portion that rotates together with at least any of the rotors, and in a still portion, and
wherein the control device provided in the rotation portion and the control device provided in the still portion communicate with a control signal via a slidable portion which is configured of a brush and a slip ring.

14. The rotation electric machine system according to any one of claims 1 to 11,
wherein the control devices which control the power converter are separately provided in the rotation portion which rotates together with any of the rotors, and in the still portion, and
wherein the control device provided in the rotation portion and the control device provided in the still portion communicate with the control signal via a non-contact communication method.

15. A wind power generation system, comprising:
the rotation electric machine system according to any one of claims 1 to 14;
a blade which receives wind and rotates; and
a shaft which rotates in accordance with rotation of the blade,
wherein each of the rotation electric machines rotates in accordance with rotation of the shaft.
